# EUROPÄISCHE PATENTSCHRIFT

(11) **EP 3 921 362 B1**
(45) Veröffentlichungstag und Bekanntmachung des Hinweises auf die Patenterteilung: **23.07.2025**
(21) Anmeldenummer: 20701814.4
(22) Anmeldetag: 31.01.2020
(51) Int. Cl.: C08J 3/12

(54) **LEICHT LÖSLICHE UND RIESELFÄHIGE GRANULATE AUF BASIS VON HOCHTEMPERATURTHERMOPLASTEN MIT NIEDRIGEM GEHALT AN FLÜCHTIGEN ORGANISCHEN VERBINDUNGEN**
EASILY SOLUBLE AND FREE-FLOWING GRANULAR MATERIAL ON THE BASIS OF HIGH-TEMPERATURE THERMOPLASTIC WITH LOW VOC CONTENT
GRANULÉS FACILEMENT SOLUBLES ET COULANTS À BASE DE MATIÈRES THERMOPLASTIQUES HAUTE TEMPÉRATURE À FAIBLE TENEUR EN COMPOSÉS ORGANIQUES VOLATILS

(30) Priorität: 04.02.2019 EP 19155300
(43) Veröffentlichungstag der Anmeldung: 15.12.2021
(73) Patentinhaber: BASF SE, 67056 Ludwigshafen am Rhein (DE)
(72) Erfinder: GRAMLICH, Simon, 67056 Ludwigshafen (DE); AHLERS, Juergen, 67056 Ludwigshafen (DE); GUTMANN, Peter, 67056 Ludwigshafen (DE); QUEIROZ DA FONSECA, Isa Alexandra, 67056 Ludwigshafen (DE)
(74) Vertreter: BASF IP Association
(86) Internationale Anmeldenummer: PCT/EP2020/052422
(87) Internationale Veröffentlichungsnummer: WO 2020/161012

(56) Entgegenhaltungen:
- EP-A2- 0 411 437
- WO-A1-2014/033321
- WO-A1-2016/100321
- WO-A1-2019/025245
- WO-A1-94/15999
- DE-A1- 4 436 046

## Beschreibung

Die vorliegende Erfindung betrifft leicht lösliche und rieselfähige Granulate auf Basis von Hochtemperaturthermoplasten mit niedrigem Gehalt an flüchtigen organischen Verbindungen sowie Verfahren zu deren Herstellung und Verwendung.

Zur Herstellung von Membranen oder Beschichtungen werden in der Regel Lösungen von Hochtemperaturthermoplasten, insbesondere Polyethersulfonen benötigt. Hierfür werden bevorzugt rieselfähige Hochtemperaturthermoplasten eingesetzt, die sich in den verwendeten Lösungsmitteln schnell auflösen. Kompakte Granulate lösen sich in der Regel nur langsam auf. Pulver oder Flocken neigen häufig zu Verklumpung.

Die WO 94/15999 beschreibt Mikropulver aus Polyarylenethersulfonen oder -ketonen mit sphärischen Teilchen einer im wesentlichen glatten Oberflächenstrukur, die durch Sprühtrocknung von Polyarylenethersufonlösungen in N-Methylpyrrolidon, Dimethylsulfoxid oder Dimethylformamid erhältlich sind. Die Mikropulver zeichnen sich durch eine enge Teilchengrößenverteilung mit mittleren Teichendurchmessern von 2 - 70 µm aus und eigen sich insbesondere zum Beschichten metallischer Oberflächen. Um den Gehalt an Restlösemitteln zu verringern muss in der Regel eine Nachtrocknung, beispielsweise in einem Wirbelbett oder Fließbett erfolgen.

Die US 2012/0245239 A1 beschreibt Polyetherimidpartikel oder Pulver mit einer hohen Oberfläche und hoher Porosität, dich durch Fällung von Polymerlösungen in heißem Wasser oder Dampf erhältlich sind. Die Löslichkeit der Polyetherimidpulver in N-Methylformamid bei 80° C liegt zwar unter der von mechanisch zerkleinerten Polyetherimiden, aber noch immer im Bereich von einer Stunde.

Die WO 2019/025245 A1(PCT/EP2018/070084) beschreibt expandierbare, treibmittelhaltige Granulate auf Basis von Hochtemperaturthermoplasten sowie ein Verfahren zu deren Herstellung. Die expandierbaren treibmittelhaltigen Granulate können zu Schaumstoffpartikel mit einer Schüttdichte nach DIN ISO 697:1982 im Bereich von 10 bis 200 kg/m³ verschäumt werden.

In der Regel stören Restgehalte an Lösungsmitteln, wie Aceton, Methylethylketon, Ethanol, Isopropanol, N-Methylpyrrolidon, Dimethylformamid, Sulfolan oder Dimethylsulfoxid, die in den vorgenannten Verfahren zur Herstellung der Hochtemperaturthermoplasten eingesetzt wurden, bei der Weiterverarbeitung zu Beschichtungen oder Membranen, beispielsweise Dialysemembranen. Die Lösungsmittel müssen daher aufwändig aus den Polymergranulaten entfernt werden.

Die WO 2014/033321 beschreibt ein lösemittelfreies Verfahren zur Herstellung von aromatischen Polyethersulfonen durch Umsetzung einer Dichlordiphyenylsulfon-Komponente mit einer Bisphenol-Komponente in Gegenwart von Alkalicarbonat in der Schmelze in einem Mischkneter. Hierbei entstehen lösemittefreie Granulate, die sich aber nur langsam in Lösungsmitteln, wie N-Methylpyrrolidon, wieder auflösen lassen.

Aufgabe der vorliegenden Erfindung war es daher, leicht lösliche und rieselfähige Granulate mit niedrigem Gehalt an flüchtigen organischen Verbindungen und Verfahren zu deren Herstellung bereitzustellen.

Die Aufgabe wurde durch Granulate auf Basis von Hochtemperaturthermoplasten, ausgewählt aus der GruppePolyarylethersulfone, Polyaryletherketone, Polyphenylensulfide, Polyetherimide, Polyphenylenamide, Polycarbonate, aromatische Polyestercarbonate, Hochtemperaturpolyamide (HTPA), thermoplastische Polyoxzolidone und Copolycarbonate oder Mischungen davon, mit einer Schüttdichte nach DIN ISO 697:1982 im Bereich von 100 bis 650 kg/m³ und einen Gehalt an flüchtigen organischen Verbindungen von unter 0,1 Gew.-% gelöst.

Bevorzugte Ausführungsformen sind den Unteransprüchen zu entnehmen.

Als Hochtemperaturthermoplasten kommen erfindungsgemäß amorphe thermoplastische Polymere mit einer Glasüberganstemperatur T_{g} von mindestens 165° C, bevorzugt im Bereich von 180° bis 240° C, gemessen mittels Dynamischer Differenz-Thermoanalyse (DSC) nach ISO 11357-2:1999 mit einer Aufheizrate von 10 K/min und teilkristalline thermoplastische Polymere mit einer Schmelzepeaktemperatur Tₚₘ nach ISO 11357-3:2011-05-01 von mindestens 250° C, bevorzugt im Bereich von 260 bis 350° C in Betracht.

Die Hochtemperaturthermoplasten sind Polyarylethersulfone, Polyaryletherketone, Polyphenylensulfide, Polyetherimide, Polyphenylenamide, Polycarbonate, aromatische Polyestercarbonate, Hochtemperaturpolyamide (HTPA), thermoplastische Polyoxzolidone und Copolycarbonate (PC-HAT) aus BPA und BPTMC. Besonders bevorzugt sind Polysulfone (PSU), Polyphenylsulfone (PPSU) und Polyethersulfone (PESU).

Die Schüttdichte der Granulate nach DIN ISO 697:1982 liegt erfindungsgemäß im Bereich von 100 bis 650 kg/m³, bevorzugt im Bereich von 210 bis 390 kg/m³. Bei Schüttdichten unter 100 kg/m³ können die Granulate beim Auflösen im Lösungsmittel aufschwimmen und bei Schüttdichten über 700 kg nimmt die Zeit, die für die vollständige Auflösung der Granulate benötigt wird, zu.

Die Granulate weisen einen Gehalt an flüchtigen organischen Verbindungen (VOC) von unter 0,1 Gew.-%, bevorzugt unter 0,01 Gew.-% auf. Als flüchtige organische Verbindungen werden solche mit einem Siedepunkt zwischen Isopentan (28° C) und n-Hexadecan (287° C) verstanden. Besonders bevorzugt liegt der Gesamtgehalt an Aceton, Ethanol, Isopropanol, N-Methylpyrrolidon, Dimethylformamid, Sulfolan und Dimethylsulfoxid, bezogen auf die Granulate, unter unter 0,1 Gew.-%. Der Gehalt an flüchtigen organischen Verbindungen (VOC) kann z.B. mittels über Headspace-GC/MS oder wie in DIN ISO 16000-6:2012-11 beschrieben, bestimmt werden.

Die Granulate weisen in der Regel eine mittlere Masse im Bereich von 1 bis 50 mg, bevorzugt im Bereich von 3 bis 20 mg, besonders bevorzugt im Bereich von 3 bis 8,5 mg auf. Zur Bestimmung der mittleren Masse werden ca. 100 Granulate gewogen und der Mittelwert für ein Granulat ermittelt.

Die Granulate sind in der Regel kugelförmig, ellipsoid oder zylinderförmig. Bevorzugt sind sie kugelförmig oder ellipsoid und weisen ein L/D-Verhältnis (Längste Abmessung (L) zu Durchmesser (D) der Granulate) im Bereich von 1/1 bis 2,5/1, bevorzugt im Bereich von 1/1 bis 2/1 auf. L/D-Verhältnissen über 2,5/1 oder unter 1/2 nimmt die Rieselfähigkeit stark ab. Das L/D-Verhältnis kann durch Ausmessen von mindestens 20 Granulaten und Mittelwertbildung oder bevorzugt durch dynamische Bildanalyse (Camsizer), bei der die Schattenprojektion der durch einen Trichter strömenden Granulate mit Kameras aufgenommen wird, ermittelt werden.

Die erfindungsgemäßen Granulate sind schnell löslich in gängigen Lösungsmitteln. Bevorzugt lösen sich 2g des Granulates in 100 ml N-Methylpyrrolidon bei 80° C in weniger als 100 Minuten, bevorzugt in weniger als 60 Minuten vollständig auf.

Die erfindungsgemäßen Granulate sind rieselfähig. Bevorzugt weisen sie eine Rieselfähigkeit im Bereich von 1 bis 6 Sekunden, besonders bevorzugt im Bereich von 2 bis 5 Sekunden gemessen nach DIN EN ISO 6186:1998, auf.

Bevorzugt bestehen die Granulate aus einem Hochtemperaturthermoplasten, besonders bevorzugt aus einem Polyarylethersulfon, mit einer Viskositätszahl im Bereich von 40 bis 100 cm³/g, gemessen nach ISO 307, 1157,1628 in 0,01 g/ml Phenol/1,2, ortho-Dichlorbenzol, 1:1.

Bevorzugt enthalten die Granulate keine Feststoffe als Additive, insbesondere keine Füllstoffe oder Nukleierungsmittel, wie Talkum.

Gegenstand der Erfindung sind auch Verfahren zur Herstellung der erfindungsgemäßen Granulate durch Extrusion einer treibmittelhaltigen Schmelze des Hochtemperaturthermoplasten.

Ein bevorzugtes Verfahren zur Herstellung der oben beschriebenen, erfindungsgemäßen Granulate umfasst die Stufen:
a) Herstellen einer Polymerschmelze durch Aufschmelzen von mindestens einem Hochtemperaturthermoplasten mit einem Gehalt an flüchtigen organischen Verbindungen von unter 0,1 Gew.-%,
b) Zugabe eines Treibmittels zu der Polymerschmelze
c) gegebenenfalls Fördern der Polymerschmelze über eine Zahnradpumpe
d) Fördern der treibmittelhaltigen Polymerschmelze bei einer Temperatur im Bereich von 250° bis 350° C durch eine Lochplatte und
e) Granulieren der treibmittelbeladenen Polymerschmelze.

Ein weiteres bevorzugtes Verfahren zur Herstellung der oben beschriebenen, erfindungsgemäßen Granulate umfasst die Stufen:
a) Herstellen einer Polymerschmelze durch Umsetzung einer Dichlodiphenylsulfon-Komponente mit einer Bisphenol-Komponente als Monomeren in Gegenwart von Alkalicarbonat in der Schmelze in Abwesenheit von Lösungs- oder Verdünnungsmitteln und anschließender Abtrennung von Salzen,
b) Zugabe eines Treibmittels zu der Polymerschmelze,
c) gegebenenfalls Fördern der Polymerschmelze über eine Zahnradpumpe und einen Schmelzefilter,
d) Fördern der treibmittelhaltigen Polymerschmelze bei einer Temperatur im Bereich von 250° bis 350° C durch eine Lochplatte und
e) Granulieren der treibmittelbeladenen Polymerschmelze.

In beiden bevorzugten Verfahren kann die Granulation mittels Stranggranulation, Wasserringgranulation oder Unterwassergranulation erfolgen. Bevorzugt erfolgt die Granulation in Stufe e) der beiden bevorzugten Verfahren in einem bei einer Wassertemperatur im Bereich von 75 bis 99° C und einem Druck im Bereich von 1 bis 10 bar betriebenen Unterwassergranulator.

Als Treibmittel werden bevorzugt Stickstoff, Kohlendioxid, Wasser oder Mischungen davon eingesetzt werden. Die Treibmittel oder Treibmittelmischungen werden in Mengen von 1 bis 10 Gew.-%, bevorzugt 2 bis 5 Gew.-%, bezogen auf die Hochtemperaturthermoplasten, zugesetzt.

Durch die Wahl des Treibmittels und des Drucks im Unterwassergranulator kann die Schüttdichte der erfindungsgemäßen Granulate gesteuert werden. Niedrige Schüttdichten werden durch niedrigere Drücke und/oder geringere Treibmittelmengen erzielt.

Als Hochtemperaturthermoplast können die oben für die erfindungsgemäßen Granulate beschriebenene Polymeren eingesetzt werden. Bevorzugt wird ein Polyarylenethersulfon mit einer Viskositätszahl im Bereich von 40 bis 100 cm³/g, gemessen nach ISO 307, 1157,1628 in 0,01 g/ml Phenol/1,2, ortho-Dichlorbenzol, 1:1 eingesetzt.

Geeignete Polyethersulfone mit niedrigem Restmononmerengehalt können zum Beispiel durch Umsetzung einer Dichlodiphenylsulfon-Komponente mit einer Bisphenol-Komponente als Monomeren in Gegenwart von Alkalicarbonat in der Schmelze in Abwesenheit von Lösungs- oder Verdünnungsmitteln und anschließendem Abtrennen der Salze, wie in WO 2014/033321 und WO 2017/162485 beschrieben, erhalten werden.

Bevorzugt werden der Polymerschmelze keine Feststoffe als Additive, insbesondere keine Füllstoffe oder Nukleierungsmittel, wie Talkum zugegeben.

Die erfindungsgemäßen Granulate können bevorzugt zur Herstellung von Membranen, insbesondere Dialysemembranen, Beschichtungen oder zur Zähmodifzierung von Reaktivharzen verwendet werden.

### Beispiele

Eingesetzte Rohstoffe:

| | |
|---|---|
| Ultrason E2010 natur | Polyethersulfongranulat der Fa. BASF SE, Dichte 1370 kg/m³, Viskositätszahl 56 cm³/g, Glasübergangstemperatur DSC (10° C/min) 225 ° C, Schüttdichte 750 g/l. |
| Ultrason E3010 natur | Polyethersulfongranulat der Fa. BASF SE, Dichte 1370 kg/m³, Viskositätszahl 66 cm³/g, Glasübergangstemperatur DSC (10° C/min) 225 ° C) Schüttdichte 750g/l. |

### Treibmittel: H2O

### Messmethoden:

### Bestimmung der Schüttdichte:

Die Schüttdichte der treibmittelfreien, porösen Granulate wurde nach DIN ISO 697:1982 bestimmt.

### Bestimmung der Löslichkeit

Zur Bestimmung der Löslichkeit wurden jeweils 2g Polyethersulfon in 100ml N-Methylpyrrolidon (NMP) in einem Becherglas bei 80°C auf einer Rüttelplatte bei 150 rpm gelöst. Gemessen wurde die Zeit bis zum vollständigen Auflösen der Granulate. Die Drehzahl der Rüttelplatte betrug für 30 min 150 rpm und danach 300 rpm.

### Bestimmung der Rieselfähigkeit

Die Rieselfähigkeit der Granulate wurde gemäß DIN EN ISO 6186:1998, Verfahren B und einem Prüftrichter mit Durchmesser des Auslaufs von 15 mm, bestimmt.

### Bestimmung des Gehalts an flüchtigen organischen Verbindungen (VOC)

Der Gehalt an flüchtigen organischen Verbindungen (VOC) wurde mittels Headspace GC/MS wie folgt bestimmt.

### Messbedingungen Headspace:

Probentemperatur: 70 °C
Temperierzeit: 60 min
Interface Temperatur: 150 °C
Normaldruck: 115 kPa
Hochdruck: 180 kPa
Injektionszeit: 0,20 min
Kryofokussierung: 2,5/2,5 min (pre/post)
Einwaage: 152 mg Probe+ 2ml DMAA
Meßbedingungen GC/MS
Trennkapillare: DB-1 30m 0,25mm 1µm
Temperaturprogramm: 40°C; 8,5min; 5°C/min; 260°C; 10min
Vordruck: 70 kPa
Split: ca. 20 ml/min
Scan: 25 - 400 amu

Zur quantitativen Bestimmung wurden Aceton und Isopropanol als Referenz eingesetzt.

### Bestimmung des L/D-Verhältnisses:

Das L/D-Verhältnis wurde durch dynamische Bildanalyse (Camsizer), bei der die Schattenprojektion der durch einen Trichter strömenden Granulate mit Kameras aufgenommen wurden, bestimmt. Die Kenngröße L/D wurde aus der Camsizergröße b/l₃ ermittelt, b/l₃=xc,min/xFe,max mit xc, min der kürzesten Sehne in Projektionsebene und xFe,max, dem maximalen Feretdurchmesser in Projektionsebene. L/D=l₃/b.

### Beispiele B-1 - B-6: Herstellung von porösen Granulaten aus Polyethersulfonen

Herstellung der porösen Granulate fand in einer Apparatur bestehend aus einem in acht Zonen 35 (Z1···Z8) unterteilten Doppelschneckenextruder der Firma Leistritz mit 18 mm

Schneckendurchmesser und einem Längen zu Durchmesserverhältnis von 40, einer Schmelzepumpe (Zahnradpumpe ZRP), Anfahrventil (AV), Schmelzefilter, Lochplatte (LP) und einer Unterwassergranulierung (UWG) statt.

Polyethersulfon (PESU) wurde in den Doppelschneckenextruder dosiert und aufgeschmolzen. Nach ca. 2/3 der Länge des Extruders das Treibmittel H2O mit Hilfe von Isco-Pumpen (Kolbenpumpen der Firma Axel Semrau) und einem in den Extruder eingebauten Injektor in den Extruder injiziert. Mittels der Schmelzepumpe (ZRP) wurde das Druckprofil im Extruder so eingestellt (Druck-Drehzahl-Steuerung), dass das Treibmittel vollständig in die Polymerschmelze eingemischt wurde. Neben der Einstellung des Druckprofils in dem Doppelschneckenextruder dient die Schmelzepumpe auch zur Förderung der Treibmittelimprägnierten Polymerschmelze durch die Nachfolgeeinrichtungen (das Anfahrventil, das Schmelzesieb und die Lochplatte). Der durch die Lochplatte (1 Loch mit 1,0 mm Durchmesser) austretende Schmelzestrang wurde in dem Unterwassergranulator (UWG) unter Gegendruck expandiert und zu Polyerthersulfongranulaten mit einem Granulatgewicht im Bereich von 3 - 10 mg geschnitten. Dabei wurde der Gesamtdurchsatz des Extruders konstant bei 4,6 kg/h gehalten. Der Strang in der Wasserbox wurde durch 6 am Messerkranz befestigte Messer geschnitten. Der Messerkranz rotiert dabei mit 3600 U/min. Dabei entstehen poröse Granulate welche durch den Wasserkreislauf von der Lochplatte in den Trockner transportiert werden und von dort in einen Auffangbehälter abgeschieden werden.

Die Gewichtsanteile der eingesetzten Rohstoffe sind in Tabelle 1 zusammengestellt. Der Anteil an Wasser bezieht sich auf die pro 100 Gewichtsanteilen Polymer zugesetzte Menge. Die Prozessparameter sind in Tabelle 2 zusammengestellt.

### Vergleichsversuche:

Vergleichsversuch V1 wurde wie die Beispiele B-1 bis B-6 mit den in Tabelle 1 angegebenen Verfahrensparametern durchgeführt.

**Tabelle 1: Verfahrensparameter**

| Vers.-Nr. | Durchsatz | Ultrason 2010 | | Ultrason 3010 | | Wasser | | Extruder-Temp | Wasser-Temp. UWG | Wasserdruck UWG | Granulatmasse |
|---|---|---|---|---|---|---|---|---|---|---|---|
| | g/h | Anteile | g/h | Anteile | g/h | Anteile | g/h | ° C | ° C | [bar] | mg |
| B-1 | 4603 | 100 | 4500,39 | | | 2,28 | 102,61 | 340 | 90 | 5 | 3,3 |
| B-2 | 4603 | | | 100 | 4500,39 | 2,28 | 102,61 | 340 | 90 | 5 | 5,7 |
| B-3 | 4603 | | | 100 | 4500,39 | 2,28 | 102,61 | 340 | 90 | 2,5 | 6,3 |
| B-4 | 4603 | | | 100 | 4468,93 | 3,00 | 134,07 | 340 | 90 | 5 | 6,4 |
| B-5 | 4603 | | | 100 | 4468,93 | 3,00 | 134,07 | 340 | 90 | 3 | 6,0 |
| B-6 | 4603 | | | 100 | 4425,96 | 4,00 | 177,04 | 340 | 90 | 3 | 8,3 |
| V-1 | 4603 | | | 100 | 4383,81 | 5,00 | 219,19 | 340 | 90 | 3 | 9,3 |

**Tabelle 2: Eigenschaften**

| Vers.-Nr. | Produkt | Schüttdichte trocken | Partikelmasse | Löslichkeit in NMP | VOC | Rieselfähigkeit | L/D |
|---|---|---|---|---|---|---|---|
| | | g/l | mg | [min] | [%] | [sec] | |
| B-1 | Ultrason E 2010 | 296 | 3,3 | 47 | < 0,01 | | 1,1 |
| B-2 | Ultrason E 3010 | 289 | 5,7 | 24 | < 0,01 | 3,07 | 1,2 |
| B-3 | Ultrason E 3010 | 271 | 6,3 | 29 | < 0,01 | 4,07 | 1,2 |
| B-4 | Ultrason E 3010 | 269 | 6,4 | 16 | < 0,01 | 3,17 | 1,5 |
| B-5 | Ultrason E 3010 | 271 | 6,0 | 29,0 | < 0,01 | 3,2 | 1,6 |
| B-6 | Ultrason E 3010 | 182 | 8,3 | 29 | < 0,01 | 4,13 | 1,8 |
| V-1 | Ultrason E 3010 | 92 | 9,3 | 13 | < 0,01 | Nicht rieselfähig | 2,7 |

## Patentansprüche

1. Granulate auf Basis von Hochtemperaturthermoplasten, ausgewählt aus der GruppePolyarylethersulfone, Polyaryletherketone, Polyphenylensulfide, Polyetherimide, Polyphenylenamide, Polycarbonate, aromatische Polyestercarbonate, Hochtemperaturpolyamide (HTPA), thermoplastische Polyoxzolidone und Copolycarbonate oder Mischungen davon, mit einer Schüttdichte nach DIN ISO 697:1982 im Bereich von 100 bis 650 kg/m³ und einen Gehalt an flüchtigen organischen Verbindungen von unter 0,1 Gew.-%.

2. Granulate nach Anspruch 1, **dadurch gekennzeichnet, dass** sie einen Gehalt an flüchtigen organischen Verbindungen von unter 0,01 Gew.-% aufweisen.

3. Granulate nach Anspruch 1 oder 2, **dadurch gekennzeichnet, dass** sie eine Masse im Bereich von 3 bis 8,5 mg aufweisen.

4. Granulate nach einem der Ansprüche 1 bis 3, **dadurch gekennzeichnet, dass** sie ein L/D-verhältnis im Bereich von 1/1 bis 2,5/1 aufweisen.

5. Granulate nach einem der Ansprüche 1 bis 4, **dadurch gekennzeichnet, dass** sich 2g des Granulates in 100 ml N-Methylpyrrolidon bei 80° C in weniger als 60 Minuten auflösen.

6. Granulate nach einem der Ansprüche 1 bis 5, **dadurch gekennzeichnet, dass** sie eine Rieselfähigkeit im Bereich von 1 bis 6 Sekunden, gemessen nach DIN EN ISO 6186:1998, aufweisen.

7. Granulate nach einem der Ansprüche 1 bis 6, **dadurch gekennzeichnet, dass** sie aus einem Hochtemperaturthermoplasten mit einer Viskositätszahl im Bereich von 40 bis 100 cm³/g, gemessen nach DIN EN ISO 1628-1:2012-10 in 0,01 g/ml Phenol/1,2, ortho-Dichlorbenzol, 1:1, bestehen.

8. Granulate nach einem der Ansprüche 1 bis 7, **dadurch gekennzeichnet, dass** sie eine Schüttdichte nach DIN ISO 697:1982 im Bereich von 210 bis 390 kg/m³ aufweisen.

9. Verfahren zur Herstellung von Granulaten auf Basis von Hochtemperaturthermoplasten gemäß einem der Ansprüche 1 bis 8, umfassend die Stufen:
a) Herstellen einer Polymerschmelze durch Aufschmelzen von mindestens einem Hochtemperaturthermoplasten mit einem Gehalt an flüchtigen organischen Verbindungen von unter 0,1 Gew.-%,
b) Zugabe eines Treibmittels zu der Polymerschmelze
c) gegebenenfalls Fördern der Polymerschmelze über eine Zahnradpumpe
d) Fördern der treibmittelhaltigen Polymerschmelze bei einer Temperatur im Bereich von 250° bis 350° C durch eine Lochplatte und
e) Granulieren der treibmittelbeladenen Polymerschmelze.

10. Verfahren zur Herstellung von Granulaten auf Basis von Polyarylethersulfonen gemäß Anspruch 8, umfassend die Stufen:
a) Herstellen einer Polymerschmelze durch Umsetzung einer Dichlodiphenylsulfon-Komponente mit einer Bisphenol-Komponente als Monomeren in Gegenwart von Alkalicarbonat in der Schmelze in Abwesenheit von Lösungs- oder Verdünnungsmitteln und anschließender Abtrennung von Salzen,
b) Zugabe eines Treibmittels zu der Polymerschmelze,
c) gegebenenfalls Fördern der Polymerschmelze über eine Zahnradpumpe
d) Fördern der treibmittelhaltigen Polymerschmelze bei einer Temperatur im Bereich von 250° bis 350° C durch eine Lochplatte und
e) Granulieren der treibmittelbeladenen Polymerschmelze.

11. Verfahren nach Anspruch 9 oder 10, **dadurch gekennzeichnet, dass** die Granulation in Stufe e) in einem bei einer Wassertemperatur im Bereich von 75 bis 99° C und einem Druck im Bereich von 1 bis 10 bar betriebenen Unterwassergranulator erfolgt.

12. Verfahren nach Anspruch 9 oder 10, **dadurch gekennzeichnet, dass** als Treibmittel Stickstoff, Kohlendioxid, Wasser oder Mischungen davon eingesetzt werden.

13. Verfahren nach einem der Ansprüche 9 bis 12, **dadurch gekennzeichnet, dass** als Hochtemperaturthermoplast ein Polyarylenethersulfon mit einer Viskositätszahl im Bereich von 40 bis 100 cm³/g, gemessen nach DIN EN ISO 1628-1:2012-10 in 0,01 g/ml Phenol/1,2, ortho-Dichlorbenzol, 1:1 eingesetzt wird.

14. Verwendung der Granulate nach den Ansprüchen 1 bis 8 zur Herstellung von Membranen, Beschichtungen oder zur Zähmodifzierung von Reaktivharzen.

## Claims

1. A granulate based on high-temperature thermoplastics, selected from the group of polyaryl ether sulfones, polyaryl ether ketones, polyphenylene sulfides, polyetherimides, polyphenyleneamides, polycarbonates, aromatic polyester carbonates, high-temperature polyamides (HTPA), thermoplastic polyoxazolidones and copolycarbonates or mixtures thereof, with a bulk density in the range of 100 to 650 kg/m³ in accordance with DIN ISO 697:1982 and less than 0.1% by weight content of volatile organic compounds.

2. The granulate according to claim 1, wherein said granulate has a less than 0.01% by weight content of volatile organic compounds.

3. The granulate according to claim 1 or 2, wherein the mass per pellet of said granulate is in the range of 3 to 8.5 mg.

4. The granulate according to any one of claims 1 to 3, wherein the L/D ratio of said granulate is in the range of 1/1 to 2.5/1.

5. The granulate according to any of claims 1 to 4, wherein 2 g of said granulate dissolves in 100 ml of N-methylpyrrolidone at 80°C in less than 60 minutes.

6. The granulate according to any of claims 1 to 5, wherein the flowability value of said granulate is in the range of 1 to 6 seconds, measured in accordance with DIN EN ISO 6186:1998.

7. The granulate according to any of claims 1 to 6, wherein said granulate consists of a high-temperature thermoplastic with an intrinsic viscosity in the range of 40 to 100 cm³/g, measured in accordance with DIN EN ISO 1628-1:2012-10 in 0.01 g/ml phenol/1.2, ortho-dichlorobenzene, 1:1.

8. The granulate according to any of claims 1 to 7, wherein said granulate has a bulk density in the range of 210 to 390 kg/m³ in accordance with DIN ISO 697:1982.

9. A method for the production of granulates based on high-temperature thermoplastics according to any of claims 1 to 8, comprising the stages of:
a) production of a polymer melt via melting of at least one high-temperature thermoplastic with less than 0.1% by weight content of volatile organic compounds,
b) addition of a blowing agent to the polymer melt
c) optionally conveying of the polymer melt by way of a gear pump
d) conveying of the blowing-agent-containing polymer melt at a temperature in the range of 250°C to 350°C through a pelletizing die and
e) granulation of the blowing-agent-loaded polymer melt.

10. A method for the production of granulates based on polyaryl ether sulfones according to claim 8, comprising the stages of:
a) production of a polymer melt via reaction of a dichlorodiphenyl sulfone component with a bisphenol component as monomers in the presence of alkali metal carbonate in the melt in the absence of solvents or diluents, followed by removal of salts,
b) addition of a blowing agent to the polymer melt,
c) optionally conveying of the polymer melt by way of a gear pump
d) conveying of the blowing-agent-containing polymer melt at a temperature in the range of 250°C to 350°C through a pelletizing die and
e) granulation of the blowing-agent-loaded polymer melt.

11. The method according to claim 9 or 10, wherein the granulation in stage e) takes place in an underwater pelletizer operated at a water temperature in the range of 75 to 99°C and at a pressure in the range of 1 to 10 bar.

12. The method according to claim 9 or 10, wherein nitrogen, carbon dioxide, water or mixtures thereof are used as blowing agent.

13. The method according to any of claims 9 to 12, wherein a polyarylene ether sulfone with an intrinsic viscosity in the range of 40 to 100 cm³/g, measured in accordance with DIN EN ISO 1628-1:2012-10 in 0.01 g/ml phenol/1.2, ortho-dichlorobenzene, 1:1 is used as high-temperature thermoplastic.

14. The use of the granulates according to claims 1 to 8 for the production of membranes or coatings, or for the toughness-modification of reactive resins.

## Revendications

1. Granulés à base de matières thermoplastiques haute température, sélectionnées parmi le groupe des polyaryléthersulfones, polyaryléthercétones, sulfures de polyphénylène, polyétherimides, amides de polyphénylène, polycarbonates, polyestercarbonates aromatiques, polyamides haute température (HTPA), polyoxazolidones thermoplastiques et copolycarbonates ou mélanges de ceux-ci, avec une densité apparente selon la norme DIN ISO 697:1982 dans la plage allant de 100 à 650 kg/m³ et une teneur en composés organiques volatils inférieure à 0,1 % en poids.

2. Granulés selon la revendication 1, **caractérisés en ce qu'**ils présentent une teneur en composés organiques volatils inférieure à 0,01 % en poids.

3. Granulés selon la revendication 1 ou 2, **caractérisés en ce qu'**ils présentent une masse dans la plage allant de 3 à 8,5 mg.

4. Granulés selon l'une quelconque des revendications 1 à 3, **caractérisés en ce qu'**ils présentent un rapport L/D dans la plage allant de 1/1 à 2,5/1.

5. Granulés selon l'une quelconque des revendications 1 à 4, **caractérisés en ce que** 2 g du granulé se dissolvent en moins de 60 minutes dans 100 ml de N-méthylpyrrolidone à 80 °C.

6. Granulés selon l'une quelconque des revendications 1 à 5, **caractérisés en ce qu'**ils présentent une aptitude à l'écoulement dans la plage allant de 1 à 6 secondes, mesurée selon la norme DIN EN ISO 6186:1998.

7. Granulés selon l'une quelconque des revendications 1 à 6, **caractérisés en ce qu'**ils sont constitués d'une matière thermoplastique haute température présentant un indice de viscosité dans la plage allant de 40 à 100 cm³/g, mesuré selon la norme DIN EN ISO 1628-1:2012-10 dans 0,01 g/ml de phénol/1,2, ortho-dichlorobenzène, 1:1.

8. Granulés selon l'une quelconque des revendications 1 à 7, **caractérisés en ce qu'**ils présentent une densité apparente selon la norme DIN ISO 697:1982 dans la plage allant de 210 à 390 kg/m³.

9. Procédé de fabrication de granulés à base de matières thermoplastiques haute température selon l'une quelconque des revendications 1 à 8, comprenant les étapes suivantes :
a) la fabrication d'une masse fondue de polymère par fusion d'au moins une matière thermoplastique haute température ayant une teneur en composés organiques volatils inférieure à 0,1 % en poids,
b) l'ajout d'un agent gonflant à la masse fondue de polymère,
c) éventuellement le transport de la masse fondue de polymère par l'intermédiaire d'une pompe à engrenages,
d) le transport de la masse fondue de polymère contenant un agent gonflant à une température dans la plage allant de 250 °C à 350 °C à travers une plaque perforée et
e) la granulation de la masse fondue de polymère chargée en agent gonflant.

10. Procédé de fabrication de granulés à base de polyaryléthersulfones selon la revendication 8, comprenant les étapes suivantes :
a) la fabrication d'une masse fondue de polymère par mise en réaction d'un composant dichlorodiphénylsulfone avec un composant bisphénol en tant que monomères en présence de carbonate alcalin dans la masse fondue en l'absence de solvants ou de diluants, puis la séparation de sels,
b) l'ajout d'un agent gonflant à la masse fondue de polymère,
c) éventuellement le transport de la masse fondue de polymère par l'intermédiaire d'une pompe à engrenages,
d) le transport de la masse fondue de polymère contenant un agent gonflant à une température dans la plage allant de 250 °C à 350 °C à travers une plaque perforée et
e) la granulation de la masse fondue de polymère chargée en agent gonflant.

11. Procédé selon la revendication 9 ou 10, **caractérisé en ce que** la granulation à l'étape e) est effectuée dans un granulateur sous eau fonctionnant à une température de l'eau dans la plage allant de 75 à 99 °C et à une pression dans la plage allant de 1 à 10 bars.

12. Procédé selon la revendication 9 ou 10, **caractérisé en ce que** de l'azote, du dioxyde de carbone, de l'eau ou des mélanges de ceux-ci sont utilisés en tant qu'agent gonflant.

13. Procédé selon l'une quelconque des revendications 9 à 12, **caractérisé en ce qu'**un polyarylèneéthersulfone ayant un indice de viscosité dans la plage allant de 40 à 100 cm³/g, mesuré selon la norme DIN EN ISO 1628-1:2012-10 dans 0,01 g/ml de phénol/1,2, ortho-dichlorobenzène, 1:1, est utilisé en tant que matière thermoplastique haute température.

14. Utilisation des granulés selon les revendications 1 à 8 pour la fabrication de membranes, de revêtements ou pour la modification de la viscosité de résines réactives.
